# EUROPÄISCHE PATENTANMELDUNG

(11) **EP 1 147 943 A2**
(43) Veröffentlichungstag der Anmeldung: **24.10.2001**
(21) Anmeldenummer: 01108556.0
(22) Anmeldetag: 05.04.2001
(51) Int. Cl.: B60R 16/02

(54) **Solarsystem für ein Fahrzeug**

(30) Priorität: 19.04.2000 DE 10019675
(71) Anmelder: Webasto Vehicle Systems International GmbH, 82131 Stockdorf (DE)
(72) Erfinder: Ganz, Thomas, 82152 Krailling (DE)
(74) Vertreter: Konnerth, Dieter Hans

(57) **Zusammenfassung**

Die Erfindung betrifft ein Solarsystem für ein Fahrzeug, das einen Solargenerator (10) sowie einen Energiespeicher (16) zur Stromversorgung mindestens einen elektrischen Verbrauchers (22) aufweist, wobei der Solargenerator zum Aufladen des Energiespeichers vorgesehen ist. Bei dem Energiespeicher (16) handelt es sich um mindestens einen hochkapazitiven Kondensator.

## Beschreibung

Die vorliegende Erfindung betrifft ein Solarsystem für ein Fahrzeug, insbesondere ein Kraftfahrzeug, gemäß dem Oberbegriff von Anspruch 1.

Solche gattungsgemäßen Solarsysteme (siehe beispielsweise DE 41 30 226 C1) umfassen üblicherweise einen Solargenerator auf dem Fahrzeugdach, z.B. in einen verstellbaren Deckel integriert, dessen erzeugte elektrische Energie zum Aufladen der Fahrzeugbatterie, bei welcher es sich üblicherweise um einen 12 V-Bleiakkumulator handelt, und zum Betrieb des Motors eines Lüfters verwendet wird, welcher den Fahrzeuginnenraum während Standzeiten des Fahrzeugs entlüften und so insbesondere bei starker Sonneneinstrahlung günstiger klimatisieren kann. Dabei ist es bekannt, ein Steuergerät vorzusehen, welches beispielsweise verhindern kann, dass der Standlüftermotor die Fahrzeugbatterie entlädt.

Dabei wird der Standlüfter oft in Abhängigkeit von der Sonneneinstrahlung betrieben. Dies kann zur Folge haben, dass der Lüftermotor oft und lange in einem ungünstigen Betriebspunkt arbeitet, was sowohl einen geringen hydraulischen Wirkungsgrad als auch eine Reduzierung der Lebensdauer durch erhöhten Lagerverschleiß (der Schmierfilm baut sich erst bei Drehzahlen von mehreren hundert Umdrehungen pro Minute auf) und ferner einen pastenartigen Abrieb der Kohlen auf dem Kollektor zur Folge hat, wenn ein Bürsten aufweisender Elektromotor verwendet wird. Bei dieser Bauart ist die Lebensdauer des Motors im Solarbetrieb problematisch. Bürstenlose Lüftermotoren erfordern jedoch für ihren Betrieb relativ hohe Mindestspannungen, idealerweise Bordnetzspannung, und relativ hohe Mindestleistungen.

Es ist Aufgabe der vorliegenden Erfindung, ein Solarsystem für ein Fahrzeug zu schaffen, welches einen flexibleren und damit effizienteren Betrieb eines von dem Solargenerator bzw. dem Energiespeicher versorgten elektrischen Verbrauchers ermöglicht und dennoch eine hinreichend große Entladesicherheit des Energiespeichers bietet.

Diese Aufgabe wird erfindungsgemäß gelöst durch ein Solarsystem für ein Fahrzeug, wie es in Anspruch 1 definiert ist. Dabei ist vorteilhaft, dass durch die Verwendung eines kapazitiven Energiespeichers mit hoher Kapazität im Zusammenwirken mit einem Solargenerator einerseits höhere bzw. variablere Betriebsspannungen möglich sind, da ein solcher Energiespeicher wesentlich widerstandsfähiger gegenüber ausgeprägt zyklischem Betrieb ist als herkömmlich verwendete 12 V-Bleiakkumulatoren, und andererseits die inhärent geringere Energiespeicherfähigkeit im Vergleich zu herkömmlichen Bleiakkumulatoren, insbesondere die hohe Selbstentladung bei längeren Standzeiten, mittels der Aufladeoption über den Solargenerator ausgeglichen werden kann. Zusätzlich bietet der Solargenerator auch während der Betriebszeiten des Fahrzeugs eine Unterstützung des kapazitiven Energiespeichers, so dass insbesondere bei großer Solarleistung auch eine Kraftstoffeinsparung möglich ist.

Bevorzugte Ausgestaltungen der Erfindung ergeben sich aus den Unteransprüchen.

Nachfolgend wird die Erfindung anhand der beigefügten Zeichnungen beispielhaft näher erläutert, wobei:
- Fig. 1: schematisch eine beispielhafte Schaltung eines erfindungsgemäßen Solarsystems zeigt; und
- Fign. 2 bis 4: beispielhafte Verläufe der Lüfterdrehzahl und der Bordnetzspannung bei einem solaren Einspeisestrom von 0,1 A, 0,5 A bzw. 1 A zeigen.

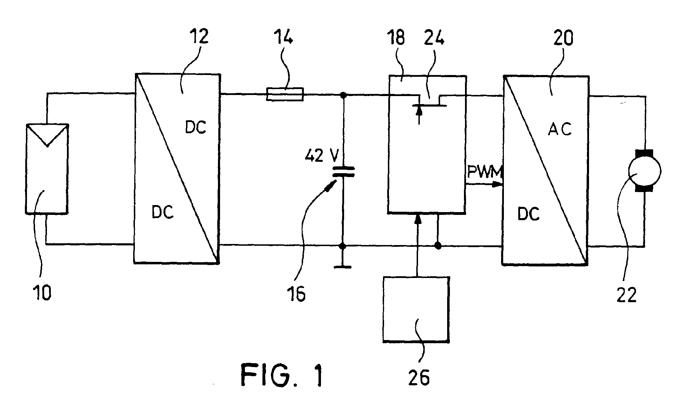

Fig. 1 zeigt ein schematisches Beispiel für die Schaltung eines erfindungsgemäßen Solarsystems. Dabei ist ein Solargenerator 10 über einen Aufwärts-DC/DC-Wandler 12 und eine Sicherung 14 parallel zu einem Kondensator 16 geschaltet, um diesen mit Ladestrom zu versorgen. Ferner ist über eine Steuereinrichtung 18 und einen DC/AC-Wandler 20 der Motor 22 eines Lüfters bzw. Gebläses parallel zu dem Kondensator 16 bzw. dem Solargenerator 10 geschaltet.

Die Steuereinrichtung 18 umfaßt einen Leistungsschalter 24 und erhält als ein Eingangssignal ein Signal von einem schematisch mit 26 bezeichneten Klimamodul.

Der Solargenerator 10 und der Aufwärts-Wandler 12 sind vorzugsweise im Dachbereich des Fahrzeugs angeordnet, wobei sie beispielsweise in einen verstellbaren Deckel beispielsweise eines Schiebedaches integriert sein können. Bei der Sicherung 14 handelt es sich vorzugsweise um eine 2A-Sicherung.

Die Kapazität des Kondensators 16 beträgt vorzugsweise mindestens 1 Farad und liegt insbeosndere zwischen 10 und 100 Farad. Es können auch mehrere solcher Kondensatoren vorgesehen sein. Der Kondensator 16 übernimmt vorzugsweise die Versorgung des gesamten Bordnetzes eines Kraftfahrzeugs, wobei auf einen herkömmlichen 12 V-Bleiakkumulator vollständig verzichtet werden kann. Das Bordnetz und der Kondensator 16 sind dabei vorzugsweise auf eine Sollspannung von 42 V ausgelegt.

Der Lüftermotor 22 ist vorzugsweise bürstenlos ausgebildet, wobei dann der DC/AC-Wandler 20 in die Motorelektronik integriert ist.
Die Steuereinheit 18 ist so ausgebildet, dass sie den Betrieb des Motors 22 in Abhängigkeit von dem Ladezustand des Kondensators 16 steuert, wobei sie beispielsweise so ausgebildet sein kann, dass der Lüftermotor 22 nur dann mit Strom versorgt werden kann, wenn ein vorbestimmter Schwellwert der Spannung des Kondensators 16, beispielsweise die Bordnetz-Sollspannung, überschritten ist. Vorzugsweise wird der Motor 22 von der Steuereinheit 18 mittels Pulsweitenmodulation über den Schalter 24 gesteuert, wobei der Motor 22 vorzugsweise intermittierend in einem Arbeitspunkt mit optimalem Wirkungsgrad betrieben wird. Das Signal von dem Klimamodul 26 dient dazu, einen unnötigen Betrieb des Lüftermotors 22, z.B. bei hinreichend niedriger Fahrzeuginnenraum-Temperatur, zu vermeiden.

Das Solarsystem ist derart dimensioniert, dass der Solargenerator 10 den Kondensator 16 auch aus dem vollständig entladenen Zustand bis zur Bordnetz-Sollspannung aufladen kann. Erst wenn diese Sollspannung am Kondensator 16 überschritten ist, gibt die Steuereinheit 18 den Lüftermotor 22 zum Betrieb frei. Ein wesentlicher Vorteil der Ausbildung des Energiespeichers mittels hochkapazitiver Kondensatoren besteht darin, dass ein solcher Energiespeicher wartungsfrei ist, eine nahezu unbegrenzte Zyklusfestigkeit aufweist und auch nicht überladen werden kann. Ein Nachteil eines kapazitiven Energiespeichers im Vergleich zu den herkömmlich verwendeten 12 V-Bleiakkumulatoren, der in der hohen Selbstenladerate der Kondensatoren besteht, wird durch die Nachlademöglichkeit über den Solargenerator 10 kompensiert, was einen wesentlichen Synergie-Effekt aus der kombinierten Verwendung eines Solargenerators und eines kapazitiven Energiespeichers darstellt. Die hohe Zyklusfestigkeit des Kondensators 16 ermöglicht einen Betrieb des Lüftermotors 22 in einem Betriebspunkt mit hohem Wirkungsgrad. Insbesondere können dadurch auch hohe Lüfterdrehzahlen genutzt werden. Ferner ist das beschriebene System insgesamt relativ einfach ausgebildet.

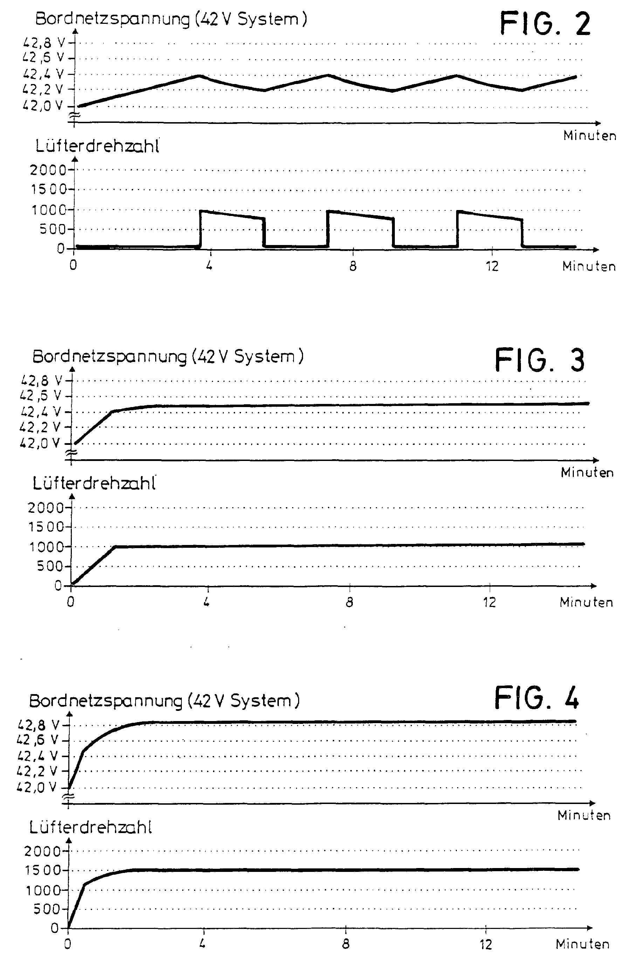

In den Fign. 2 bis 4 ist beispielhaft der Verlauf der Bordnetzspannung und der Lüfterdrehzahl beim Einspeisen eines von dem Solargenerator 10 erzeugten Stroms von 0,1 A, 0,5 A bzw. 1 A dargestellt. Dabei ist die Steuereinrichtung 18 so eingestellt, dass sie den Lüfter 22 erst bei Überschreitung von 42,0 V Bordnetzspannung mit Strom versorgt. Ein Solarstrom von 1 A entspricht dabei der Nennleistung des Solargenerators 10.

Da auf eine herkömmliche 12 V-Bleiakkumulator-Batterie verzichtet werden soll, sollte die Kapazität des Kondensators 16 ausreichend sein, um auch den Anlassermotor des Fahrzeugs betätigen zu können.

## Patentansprüche

1. Solarsystem für ein Fahrzeug, mit einem Solargenerator (10) sowie einem Energiespeicher (16) zur Stromversorgung mindestens eines elektrischen Verbrauchers (22), wobei der Solargenerator zum Aufladen des Energiespeichers vorgesehen ist, **dadurch gekennzeichnet, dass** es sich bei dem Energiespeicher (16) um mindestens einen hochkapazitiven Kondensator handelt.

2. Solarsystem nach Anspruch 1, **dadurch gekennzeichnet, dass** die Kapazität des bzw. jedes Kondensators (16) mindestens 1 Farad beträgt.

3. Solarsystem nach Anspruch 2, **dadurch gekennzeichnet, dass** die Kapazität des bzw. jedes Kondensators (16) zwischen 10 und 100 Farad beträgt.

4. Solarsystem nach einem der vorhergehenden Ansprüche, **dadurch gekennzeichnet, dass** der Energiespeicher (16) für die Versorgung des gesamten Bordnetzes ausgelegt ist.

5. Solarsystem nach Anspruch 4, **dadurch gekennzeichnet, dass** das Bordnetz auf eine Soll-Spannung von 42 V ausgelegt ist.

6. Solarsystem nach Anspruch 5, **dadurch gekennzeichnet, dass** zwischen dem Solargenerator (10) und dem Energiespeicher (16) ein Aufwärts-DC/DC-Wandler (12) vorgesehen ist.

7. Solarsystem nach Anspruch 4 bis 6, **dadurch gekennzeichnet, dass** das Bordnetz einen Standlüfter-Motor (22) umfaßt.

8. Solarsystem nach Anspruch 7, **dadurch gekennzeichnet, dass** der Standlüfter-Motor (22) bürstenlos ausgebildet ist.

9. Solarsystem nach Anspruch 7 oder 8, **dadurch gekennzeichnet, dass** eine Steuereinheit (18) vorgesehen ist, die den Betrieb des Standlüfter-Motors (22) in Abhängigkeit von dem Ladezustand des Energiespeichers (16) steuert.

10. Solarsystem nach Anspruch 9, **dadurch gekennzeichnet, dass** die Steuereinheit (18) so ausgebildet ist, dass der Standlüfter-Motor (22) nur betätigt werden kann, wenn ein vorbestimmter Schwellwert der Spannung des Energiespeichers (16), vorzugsweise die Bordnetz-Sollspannung, überschritten ist.

11. Solarsystem nach Anspruch 10, **dadurch gekennzeichnet, dass** die Steuereinheit (18) so ausgebildet ist, dass der Standlüfter-Motor (22) intermittierend in einem Arbeitspunkt mit optimalem Wirkungsgrad betrieben wird.

12. Solarsystem nach Anspruch 11, **dadurch gekennzeichnet, dass** der Standlüfter-Motor (22) mittels Pulsweitenmodulation betrieben wird.

13. Solarsystem nach Anspruch 9 bis 12, **dadurch gekennzeichnet, dass** die Steuereinheit (18) den Standlüfter-Motor (22) in Abhängigkeit von einem Signal eines Klimamoduls (26) steuert.
